# EUROPÄISCHE PATENTSCHRIFT

(11) **EP 0 618 837 B1**
(45) Veröffentlichungstag und Bekanntmachung des Hinweises auf die Patenterteilung: **18.09.1996**
(21) Anmeldenummer: 92923769.1
(22) Anmeldetag: 21.11.1992
(51) Int. Cl.: B01D 61/14, C08J 11/00, C09D 9/00

(54) **VERFAHREN ZUM ENTLACKEN**
METHOD OF REMOVING PAINT
PROCEDE DE DEVERNISSAGE

(30) Priorität: 29.11.1991 DE 4139391
(43) Veröffentlichungstag der Anmeldung: 12.10.1994
(73) Patentinhaber: Henkel Kommanditgesellschaft auf Aktien, 40191 Düsseldorf (DE)
(72) Erfinder: HÜSEMANN, Lutz, D-5657 Haan (DE); YÜKSEL, Levent, D-4000 Düsseldorf 13 (DE); SCHOLL, Rainer, D-4010 Hilden (DE)
(86) Internationale Anmeldenummer: EP9202686
(87) Internationale Veröffentlichungsnummer: WO9310888

(56) Entgegenhaltungen:
- EP-A- 0 163 383
- EP-A- 0 263 791
- WO-A-87/04638
- DE-A- 2 353 469
- DE-A- 2 404 981
- DE-A- 3 428 300

## Beschreibung

Die Erfindung betrifft ein Verfahren zum Reinigen von mit frischen Farb- und/oder Lackresten verschmutzten Gegenständen mit einem Heißentlackungsmittel.

Zum Entlacken von Gegenständen werden neben sauren und neutralen Mitteln hochalkalische Heißentlackungsmittel eingesetzt. Dabei kann im Spritz oder im Tauchverfahren gearbeitet werden. Zum Ausgleich des Wirkstoffverbrauchs wird das Entlackungsmittel üblicherweise kontinuierlich nachdosiert. Wird trockener Lack von den Gegenständen entfernt, so entsteht beim Entlacken ein Schlamm, der meist zu Boden sinkt und über einen schrägen Boden abgesaugt werden kann.

EP-A-0 163 383 beschreibt eine alkalische Entlackungslösung, die aus einer Mischung eines Alkalimetallhydroxids, eines Polyoxyalkylenpolyamin-Beschleunigers und fakultativ eines Glykol- oder Glykolether-Beschleunigers besteht.

In EP-A-0 263 791 wird ein Trenn- und Reinigungsverfahren für Pigmentsuspensionen und Pigmentzwischenproduktsuspensionen in einer Flüssigkeit mit Hilfe der Membrantechnik beschrieben, wobei die Suspension gleichmäßig und im Kreislauf in eine mindestens eine semipermeable Membran aufweisende Mikrofiltrationseinrichtung eindosiert und die Flüssigkeit durch die Membran als Permeat ausgeschieden werden, wobei man die wegfließende Permeatmenge allmählich durch eine von der ersten Flüssigkeit verschiedene Waschflüssigkeit ersetzt.

DE-A-23 53 469 offenbart ein Verfahren zur Aufbereitung eines Lackwasser-Gemisches in Lackieranlagen, in denen das mit Lackteilchen angereicherte Wasser einem Trennvorgang zugeführt wird, wobei das Lackwasser-Gemisch zur Trennung von Lack und Wasser einer Ultrafiltration mit einem Ausfiltern der kleinmolekularen Substanz, insbesondere des Wassers, unter Konzentration der großmolekularen Substanz, insbesondere des Lackes, unterzogen wird.

Bei der Entfernung von frischen Farb- bzw. Lackresten, z. B. bei der Reinigung von gebrauchten Gebinden für Farben und Lacke mit noch flüssigen und zum Teil angetrockneten Resten, enthält das Entlackungsbad eine Suspension sehr feiner, in der Schwebe gehaltener Teilchen und/oder eine Lösung der Farben bzw. Lacke. Wird im Spritzverfahren gearbeitet, so kann in diesem Fall nur so lange nachdosiert werden, bis die Viskosität zu hoch für die Druckpumpe ist oder eine Verstopfung der Spritzdüsen durch die Verschmutzungen des Bades eintreten kann. Bisher wird dann das Entlackungsbad vollständig entsorgt. Nachteilig ist hier zum einen der Entsorgungsaufwand und zum anderen der Verlust des im gebrauchten Entlackungsbad enthaltenen noch relativ hohen Anteils an Heißentlackungsmittel. Eine wirtschaftliche Regenerierung des Entlackungsbades wäre daher wünschenswert. Ein solches Verfahren ist jedoch nicht bekannt.

Bekannt dagegen ist eine Regenerierung des Entlackungsbades durch Filtration, wenn bei der chemischen Entlackung alte Farb- und Lackreste entfernt wurden, so daß die Reste im Bad als Schlamm zu Boden sinken. Bei der Entfernung von frischen Farb- und Lackresten verstopfen jedoch die Filter.

Auch der Einsatz eines Plattenphasentrenners, der Entlackungsbäder für alten Lack erfolgreich regeneriert, führt hier nicht zum Ziel.

Eine Regenerierung wäre zwar prinzipiell durch Einsatz einer Ultrazentrifuge möglich. Ihr Einsatz ist jedoch für diese Verwendung zu unwirtschaftlich.

Die Zugabe von Koaguliermittel zum Ausflocken der Verunreinigungen führt nur zum Ziel, wenn das Entlackungsbad vorher abgekühlt und mit Wasser verdünnt wird. Damit fällt weiteres zu entsorgendes Abwasser an.

Der Erfindung liegt daher die Aufgabe zugrunde, ein Entlackungsverfahren der eingangs genannten Art bereitzustellen, in dem das Entlackungsbad auf eine wirtschaftliche Weise regeneriert wird, ohne den Gehalt an Wirkstoff wesentlich zu verringern.

Diese Aufgabe wird erfindungsgemäß dadurch gelöst, daß man das wäßrige Entlackungsbad regeneriert, indem man es einer Mikrofiltration unterwirft. Dabei strömt die Badflüssigkeit ohne eine wesentliche Abkühlung mit einer Mindestströmungsgeschwindigkeit von 2 Metern pro Sekunde (m/s) und einer transmembranen Mindestdruckdifferenz von 3 bar im Querstrom über eine keramische Membran. Das Retentat wird ausgetragen.

Überraschenderweise wird in dem erfindungsgemäßen Verfahren praktisch kein Wirkstoff, also Heißentlackungsmittel, mit dem Feststoff ausgetragen, sondern er verbleibt im Permeat. Eine Nachdosierung ist also nicht notwendig. Auch eine Temperaturabsenkung vor der Regenerierung ist nicht erforderlich. Da die Regenerierung bei der erhöhten Temperatur vorgenommen wird, kann die Regenerierung in größeren Zeitabständen vorgenommen werden, denn trotz der dann höheren Verschmutzung bleibt die Viskosität des Bades niedrig genug.

Bei der Membranfiltration kann grundsätzlich mit einer relativ niedrigen transmembranen Druckdifferenz und einer entsprechend niedrigen Strömungsgeschwindigkeit gearbeitet werden, so daß der dann sich an der Oberfläche der Membran bildende Belag zusätzlich als Filtermedium dient. Das erfindungsgemäße Verfahren wird jedoch mit einer relativ hohen Strömungsgeschwindigkeit und hohen transmembranen Druckdifferenz durchgeführt. Eine Mindestströmungsgeschwindigkeit und eine Mindestdruckdifferenz werden also eingehalten. Das Problem der Verblockung der Membran tritt trotz der relativ hohen Temperatur, die etwa bei 90 bis 95°C liegt, und des relativ hohen pH-Werts von etwa 14 bei typischen Heißentlackungsmitteln nicht auf. Auch die Standzeit des Mikrofiltrationsmoduls ist trotz dieser Bedingungen für den praktischen Einsatz ausreichend.

Das chemische Entlacken kann im Tauchverfahren oder im Spritzverfahren durchgeführt werden. Die Erfindung ist in der zuletzt genannten Variante besonders vorteilhaft, da das Problem der Düsenverstopfung nicht mehr auftritt.

Weitere besondere Vorteile bietet das erfindungsgemäße Verfahren, wenn man gebrauchte Gebinde für Druckfarben von deren Resten reinigt. Hier ist die Regenerierung der Badflüssigkeit bei den oft Öl- und Rußpartikel enthaltenden Druckfarben ohne den Einsatz des erfindungsgemäßen Verfahrens besonders schwierig. Trotz der Rußpartikel ist die Mikrofiltration einsetzbar, wie Versuche gezeigt haben.

Weitere Vorteile werden erzielt, wenn man die Gegenstände mit einem alkalischen Heißentlackungsmittel bei Temperaturen von etwa 90°C und mehr reinigt. Diese Bedingungen, die hohe Alkalität und die relativ hohen Temperaturen führen bei anderen Regenerierungsverfahren zu erheblichen Problemen.

Besonders lange Standzeiten ohne eine Verblockung der Membran werden erreicht, wenn man die Badflüssigkeit mit einer Geschwindigkeit von mindestens 2, insbesondere 4 m/s bei einer transmembranen Druckdifferenz von mindestens 3 bar über die Membranoberfläche strömen läßt. Das Verhältnis von Permeat zu Konzentrat beträgt dann mindestens 2:1.

Die Erfindung läßt sich in ein- oder mehrstufigen Entlackungsanlagen durchführen. Wenn man die Gegenstände in mehreren aufeinanderfolgenden Stufen mit je einem Entlackungsbad reinigt, ist es vorteilhaft, das Bad der ersten Stufe kontinuierlich oder diskontinuierlich mittels Mikrofiltration zu regenerieren, deren Permeat dem Bad der letzten Stufe zuzugeben und die Badverluste durch die Badflüssigkeit der jeweils nachfolgenden Stufe auszugleichen (Kaskadenschaltung). Die Badflüssigkeit wird so besonders wirtschaftlich ausgenutzt.

Erfindungsgemäß braucht nur noch das Konzentrat, also eine erheblich geringere Abfallmenge entsorgt zu werden. Zusatzchemikalien wie z. B. Flockungsmittel, werden nicht benötigt. Die Abfallmenge wird also nicht zusätzlich belastet. Die Energiekosten zur Abtrennung der Verunreinigungen aus dem Bad sind sehr gering, da das erfindungsgemäße Verfahren ohne eine Temperaturabsenkung und Wiederaufheizung arbeitet.

Das Verfahren ist außerdem einfach und universell einsetzbar. Bei der Mikrofiltration werden etwa 99 % der Verunreinigungen abgetrennt, so daß eine sichere Fahrweise bei der Reinigung gewährleistet ist.

Im folgenden werden zwei Ausführungsbeispiele der Erfindung anhand von Zeichnungen näher beschrieben. Es zeigen
Figur 1 ein schematisches Fließbild eines Entlackungsvorgangs und
Figur 2 ein weiteres Fließbild eines anderen, besonders vorteilhaften Entlackungsverfahrens.

In beiden Beispielen werden die zu entlackenden Gegenstände, z. B. verschmutzte Gebinde 1 für Druckfarben zunächst einer Vorreinigung 2 und dann einer Nachreinigung 3 unterzogen. Ein Teilstrom des Vorreinigungsbades wird in einem Mikrofiltrationsmodul 4 aufgearbeitet. Das Permeat 5 wird zurückgeführt. Das Retentat 6 und damit 99 % der Verunreinigungen werden entsorgt.

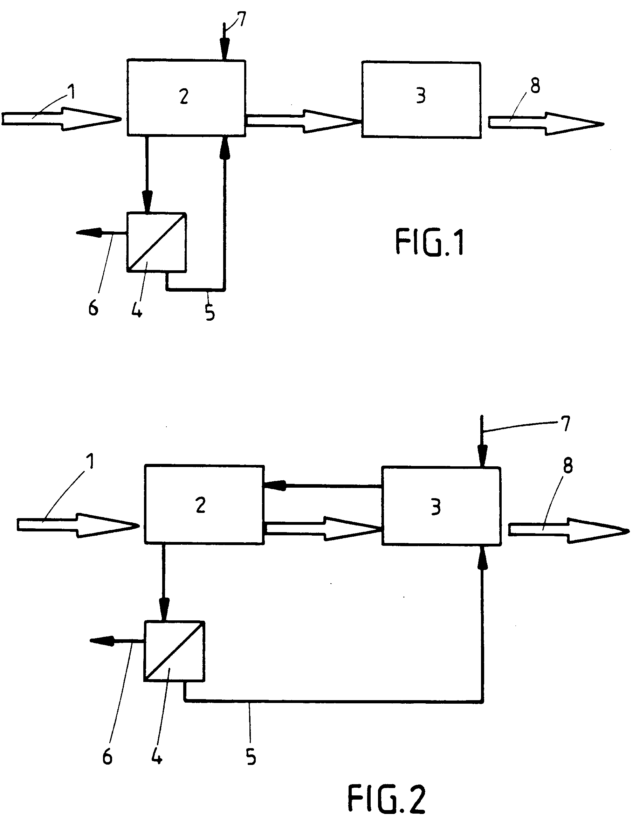

In der Variante nach Figur 1 werden die Verunreinigungen nur in der Vorreinigungsstufe 2 abgetrennt. Da in der ersten Stufe 95 % der Verunreinigungen anfallen, wird dadurch der Hauptanteil der gesamten Farbreste entfernt. Hier führt man das Permeat 5 direkt wieder in die Vorreinigung 2 zurück. Die durch den Abzug des Konzentrats (Retentats) 6 und durch Verdampfung entstandenen Verluste werden durch Frischwasser 7 ausgeglichen. Der Pfeil 8 steht schließlich für die gereinigten Gebinde.

In Figur 2 bezeichnen gleiche Bezugszeichen gleiche Teile. Im Unterschied zum Verfahren nach Figur 1 wird hier das Permeat in die Nachreinigung 3 gegeben. Vorreinigung 2 und Nachreinigung 3 sind über eine Kaskadenschaltung miteinander verbunden, so daß die Nachreinigung 3 stets mit einem sauberen Entlackungsbad versorgt wird. Badverluste werden durch Zufuhr von Frischwasser 7 in die Nachreinigung 3 ausgeglichen.

Versuche haben gezeigt, daß die Alkalität des Entlackungsbades durch das erfindungsgemäße Verfahren nicht verringert wird. Auch die Wirkstoffkomponenten des Heißentlackungsmittels werden von der Mikrofiltrationsmembran nicht zurückgehalten. Eine durch die Regenerierung bedingte Nachdosierung ist nicht erforderlich.

### Bezugszeichenliste

- 1: verschmutzte Gebinde
- 2: Vorreinigung
- 3: Nachreinigung
- 4: Mikrofiltrationsmodul
- 5: Permeat
- 6: Retentat, Konzentrat
- 7: Frischwasser
- 8: Pfeil

## Patentansprüche

1. Verfahren zum Reinigen von mit frischen Farb- und/oder Lackresten verschmutzten Gegenständen mit einem Heißentlackungsmittel und Aufbereitung des Lackwassergemisches mittels Membranfiltration,
**dadurch gekennzeichnet**,
daß man das wäßrige Entlackungsbad regeneriert, indem man es einer Mikrofiltration unterwirft, wobei die Badflüssigkeit ohne eine wesentliche Abkühlung mit einer Mindestströmungsgeschwindigkeit von 2 Metern pro Sekunde (m/s) und einer transmembranen Mindestdruckdifferenz von 3 bar im Querstrom über eine keramische Membran strömt, und das Retentat ausgetragen wird.

2. Verfahren nach Anspruch 1,
**dadurch gekennzeichnet**,
daß man die Gegenstände im Spritzverfahren reinigt.

3. Verfahren nach Anspruch 1 oder 2,
**dadurch gekennzeichnet**,
daß man gebrauchte Gebinde für Druckfarben von deren Resten reinigt.

4. Verfahren nach einem der Ansprüche 1 bis 3,
**dadurch gekennzeichnet**,
daß man die Gegenstände mit einem alkalischen Heißentlackungsmittel bei Temperaturen von etwa 90°C und mehr reinigt.

5. Verfahren nach einem der Ansprüche 1 bis 4,
**dadurch gekennzeichnet**,
daß man die Badflüssigkeit mit einer Geschwindigkeit von mindestens 4 m/s über die Membranoberfläche strömen läßt.

6. Verfahren nach einem der Ansprüche 1 bis 5,
**dadurch gekennzeichnet**,
daß man die Gegenstände in mehreren aufeinanderfolgenden Stufen mit je einem Entlackungsbad reinigt, das Bad der ersten Stufe kontinuierlich oder diskontinuierlich mittels Mikrofiltration regeneriert, deren Permeat dem Bad der letzten Stufe zugegeben wird, und die Badverluste durch die Badflüssigkeit der jeweils nachfolgenden Stufe ausgleicht (Kaskadenschaltung).

## Claims

1. A process for cleaning objects soiled with fresh paint and/or lacquer residues using a hot lacquer remover, characterized in that the water-containing lacquer removal bath is regenerated by microfiltration, the bath liquid being passed in crossflow through a ceramic membrane without significant cooling, at a minimum flow rate of 2 m/s and with a minimum transmembranal pressure difference of 3 bar and the retentate being discharged.

2. A process as claimed in claim 1, characterized in that the articles are cleaned by spraying.

3. A process as claimed in claim 1 or 2, characterized in that used containers for printing inks are cleaned to remove residues.

4. A process as claimed in any of claims 1 to 3, characterized in that the articles are cleaned with an alkaline hot lacquer remover at temperatures of around 90°C and higher.

5. A process as claimed in any of claims 1 to 4, characterized in that the bath liquid is allowed to flow through the membrane surface at a rate of at least 4 m/s.

6. A process as claimed in any of claims 1 to 5, characterized in that the articles are treated in several successive stages each with its own paint removal bath, the bath of the first stage is continuously or discontinuously regenerated by microfiltration, its permeate is added to the bath of the last stage and the bath losses are made up by the bath liquid of the following stage (cascade arrangement).

## Revendications

1. Procédé de nettoyage d'objets souillés par des résidus frais de peintures et/ou de vernis, à l'aide d'un agent de dévernissage à chaud, et retraitement du mélange d'eau et de vernis au moyen d'une filtration par membrane,
caractérisé en ce que
l'on régénère le bain aqueux de dévernissage en le soumettant à une microfiltration, le liquide de bain s'écoulant en l'espèce sans refroidissement sensible à une vitesse minimale d'écoulement de 2 mètres à la seconde (m/s) et avec une différence minimale de pression transmembranaire de 3 bars, en courant transversal, sur une membrane céramique, et le rétentat étant évacué.

2. Procédé selon la revendication 1,
caractérisé en ce que
l'on nettoie les objets dans le procédé par pulvérisation.

3. Procédé selon la revendication 1 ou 2,
caractérisé en ce que
l'on nettoie des bidons pour encres d'imprimeries souillés des résidus de celles-ci.

4. Procédé selon une des revendications 1 à 3,
caractérisé en ce que
l'on nettoie les objets à l'aide d'un agent de dévernissage à chaud alcalin, à des températures d'environ 90 °C et plus.

5. Procédé selon une des revendications 1 à 4,
caractérisé en ce que
l'on fait s'écouler le liquide du bain à une vitesse d'au moins 4 m/s sur la surface de la membrane.

6. Procédé selon une des revendications 1 à 5,
caractérisé en ce que l'on nettoie les objets en plusieurs étapes successives, comportant chacune un bain de dévernissage distinct, le bain de la première étape étant régénéré, de manière continue ou discontinue, par une microfiltration dont le perméat est ajouté au bain de la dernière étape, et les pertes de bain étant compensées par le liquide de bain de l'étape suivante (montage en cascade).
